# EUROPEAN PATENT APPLICATION

(11) **EP 1 513 327 A2**
(43) Date of publication of application: **09.03.2005**
(21) Application number: 04004057.8
(22) Date of filing: 23.02.2004
(51) Int. Cl.: H04M 1/60, H04M 1/725

(54) **Portable radio communication apparatus and handsfree conversation method and system**

(30) Priority: 04.09.2003 JP 2003312828
(71) Applicant: Kabushiki Kaisha Toshiba, Tokyo (JP)
(72) Inventor: Sato, Hiroto ,c/o IP Division, Tokyo 105-8001 (JP); Nagahama Kentaro ,c/o IP Division, Tokyo 105-8001 (JP); Aoki, Takayasu ,c/o IP Division, Tokyo 105-8001 (JP); Tamura, Toshiya ,c/o IP Division, Tokyo 105-8001 (JP)
(74) Representative: HOFFMANN - EITLE

(57) **Abstract**

An audio gateway control unit (34) of an audio gateway (3) serving as a portable radio communication apparatus holds status information indicating that the audio gateway (3) is connected to a mobile communication network (1) and a response to an incoming call issued before a handsfree apparatus (4) starts up is on hold, and sends the status information to a handsfree control unit (44) via a data channel (5) of a short-range communication link set after the handsfree apparatus (4) starts up. The handsfree control unit (44) sends both an instruction to release the response from the hold and a request to set a voice channel to the audio gateway control unit (34) automatically or based on an input operation of a handsfree operation unit (45), and the audio gateway control unit (34) receives both the instruction and request to release the response from the hold and set the voice channel (6).

## Description

The present invention relates to a handsfree phone conversation method, a portable radio communication apparatus and a handsfree system, which are capable of smoothly shifting a phone conversation to a handsfree apparatus even when the handsfree apparatus starts up after an incoming call is issued from a mobile communication network.

A communication procedure for making a handsfree conversation through a portable radio communication apparatus in an automobile is defined as a handsfree profile. In a handsfree system including a portable radio communication apparatus that is connected to a car-installed handsfree apparatus through a short-range communication means (e.g., a radio link such as Bluetooth™), when an incoming call is issued from a mobile communication network, the handsfree apparatus can give an instruction to respond to the incoming call to make a handsfree phone conversation.

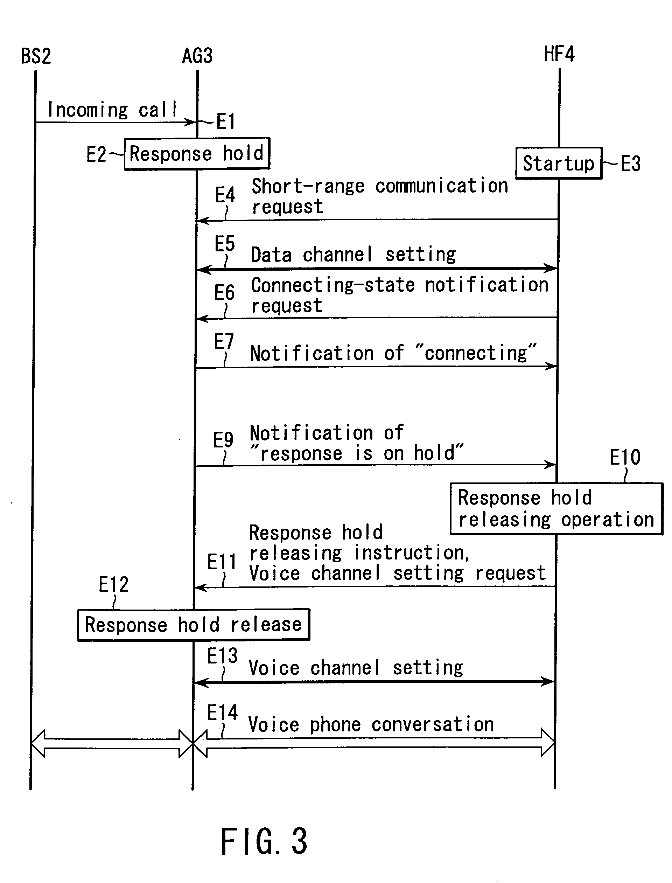

Another invention was made as follows. A radio link is automatically established when a portable radio communication apparatus comes within a certain distance from a car-installed apparatus. When a mobile communication network issues a call, a response to the call is automatically shifted to a handsfree phone conversation (see Jpn. Pat. Appln. KOKAI Publication No. 2001-218262, page 2 and FIG. 3).

The above inventions have the following problem. An incoming call, which is issued before an automobile starts and a short-range communication link is not established between a portable radio communication apparatus and a car-installed handsfree apparatus and whose response is temporarily set on hold in the portable radio communication apparatus, cannot smoothly be shifted to a handsfree phone conversation after the short-range communication link is established. Note that the response holding indicates a process of temporarily holding a response to an incoming call from the mobile communication network until a specific condition is established, without immediately responding to the incoming call. The response to the incoming call is executed upon a process of releasing the response holding state after the specific condition has been established. Generally, such processes are carried out upon user's button operations or the like.

Accordingly, it is an object of the present invention to provide a handsfree phone conversation method, a portable radio communication apparatus and a handsfree system, in which an incoming call a response to which is temporarily on hold in a portable radio communication apparatus can smoothly be shifted to a handsfree phone conversation after a short-range communication link of a handsfree system is established.

According to one aspect of the present invention, there is provided a handsfree phone conversation method, characterized by comprising transmitting a short-range communication request to a portable radio communication apparatus, which is connectable to a mobile communication network, from a handsfree apparatus having short-range communication means, and allowing the short-range communication means to perform two-way communication with the portable radio communication apparatus; requesting the portable radio communication apparatus to make a notification of a connection between the portable radio communication apparatus and the mobile communication network by the handsfree apparatus; notifying the handsfree apparatus that the portable radio communication apparatus is connected to the mobile communication network and is placing a response to an incoming call on hold by the portable radio communication apparatus in a case where the incoming call is issued from the mobile communication network before the notification of the connection is received and the response is on hold; requesting the portable radio communication apparatus to release the response from the hold by the handsfree apparatus that has been notified, and requesting the short-range communication means to set a voice channel; and releasing the response from the hold by the portable radio communication apparatus that has been requested, and setting a voice channel between the portable radio communication apparatus and the handsfree apparatus through the short-range communication means, thereby allowing a voice phone conversation using the handsfree apparatus.

This summary of the invention does not necessarily describe all necessary features so that the invention may also be a sub-combination of these described features.

The invention can be more fully understood from the following detailed description when taken in conjunction with the accompanying drawings, in which:
FIGS. 1A and 1B are block diagrams of a handsfree system according to a first embodiment of the present invention, showing a configuration in which a voice channel is not set and a configuration in which it is set, respectively;
FIG. 2 is a sequence chart of an operation of the handsfree system according to the first embodiment of the present invention;
FIG. 3 is a sequence chart of an operation of a handsfree system according to a second embodiment of the present invention;
FIG. 4 is a sequence chart of an operation of a handsfree system according to a third embodiment of the present invention; and
FIG. 5 is a sequence chart of an operation of a handsfree system according to a fourth embodiment of the present invention.

Embodiments of the present invention will now be described with reference to the accompanying drawings.

### (First Embodiment)

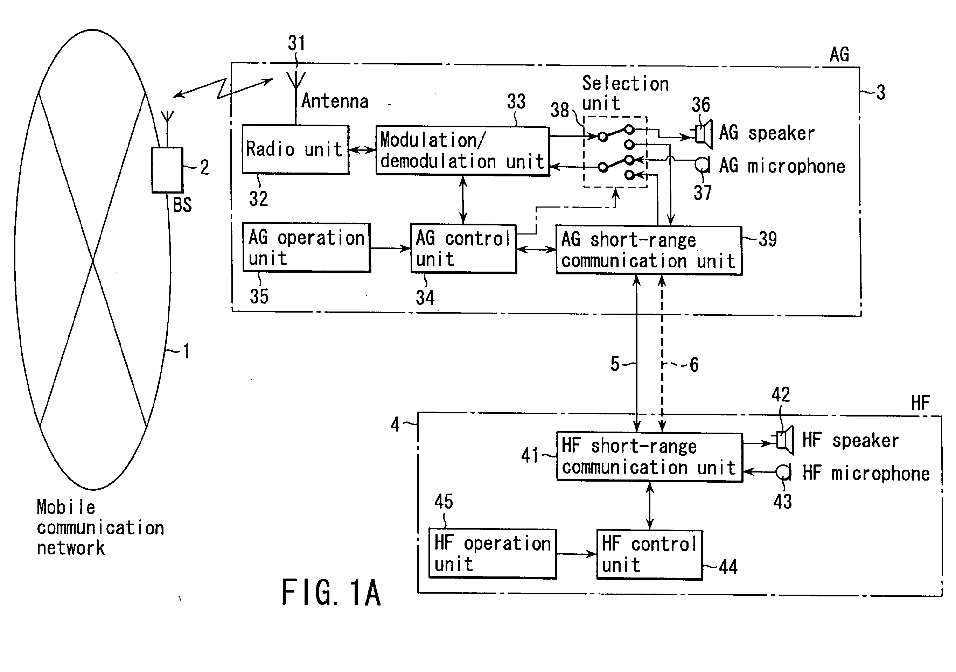

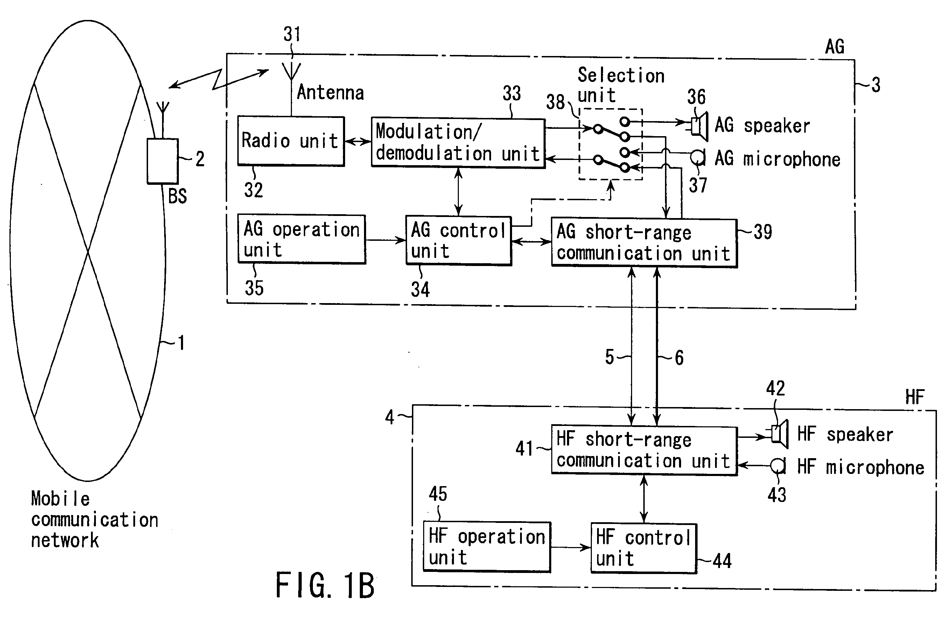

A handsfree system according to a first embodiment of the present invention will now be described with reference to FIGS. 1A and 1B. FIG. 1A is a block diagram showing a configuration of the handsfree system in which a voice channel is not set and FIG. 1B is a block diagram showing a configuration of the handsfree system in which the voice channel is set.

In FIGS. 1A and 1B, reference numeral 1 indicates a mobile communication network that offers public service, reference numeral 2 shows one of a number of base stations (referred to as BS hereinafter) belonging to the mobile communication network 1, reference numeral 3 denotes a portable radio communication apparatus (audio gateway that is referred to as AG hereinafter) such as a portable radiotelephone that configures the handsfree system, and reference numeral 4 represents a handsfree apparatus (referred to as HF hereinafter) that also configures the handsfree system to input/output voice. FIG. 1A shows an initial connection before an operation described later starts to perform, and FIG. 1B shows a modification to the connection in a certain stage of the operation.

The AG3 and HF 4 should hold common information with respect to the following items:
i) whether or not a voice phone conversation through the mobile communication network is being established; and
ii) whether or not a response to an incoming call from the mobile communication network is being held (i.e., whether or not a response holding is being executed)

Regarding item i), there is no problem because the information is informed from the AG3 to the HF 4 upon a short-range communication request described later.

Regarding item ii), according to prior art, there is a probability that the AG3 and HF 4 have different information, resulting in inconsistency of information. The present embodiment resolves such a problem.

The internal structure of the AG 3 will now be described. The AG 3 performs radio communication with the BS 2 via an antenna 31, a radio unit 32 and a modulation/demodulation unit 33. An AG control unit 34 holds a response to an incoming call and releases the response from the hold, and controls a shift of a phone conversation to the HF 4. An AG operation unit 35 serves to operate the AG 3.

An AG speaker 36 and an AG microphone 37 each function as a user interface when the AG 3 is used for a phone conversation. A selection unit 38 is provided between the modulation/demodulation unit 33 and the AG speaker 36 and AG microphone 37 to select a flow of a voice signal according to which of the AG3 and HF4 is used for a phone conversation. The AG control unit 34 controls a selecting operation of the selection unit 38. An AG short-range communication unit 39 includes a short-range communication means together with the HF 4 and has a function necessary for short-range communication such as modulation and demodulation. If the short-range communication means is a radio link, it also serves as a radio unit and an antenna.

In FIGS. 1A and 1B, a voice coding/decoding function can be provided on the right side of the selection unit 38 or the left side thereof. The voice coding/decoding function on the left side may be included in the modulation/demodulation unit 33. The voice coding/decoding function on the right side may be included in the AG speaker 36 and AG microphone 37. This function should appropriately be designed in conformity with a suitable configuration of the AG short-range communication unit 39 and thus omitted from FIGS. 1A and 1B for the sake of brevity.

The following is a description of the internal structure of the HF 4. An HF short-range communication unit 41 includes a short-range communication means that faces the AG short-range communication unit 39 of the AG 3. The HF short-range communication unit 41 has the same function as that of the AG short-range communication unit 39. After a short-range communication link is established between the units 39 and 41, both a channel for data or control signals and a channel for voice can be set. These channels are shown as a data channel 5 and a voice channel 6 in FIGS. 1A and 1B. In FIG. 1A, a broken line indicates the voice channel 6 that has not been set.

After a phone conversation is shifted to the HF 4, the HF speaker 42 and HF microphone 43 each serve as a user interface for the phone conversation. The HF control unit 44 controls, for example, a shift of the phone conversation to the HF4. The HF operation unit 45 is used to operate the HF 4.

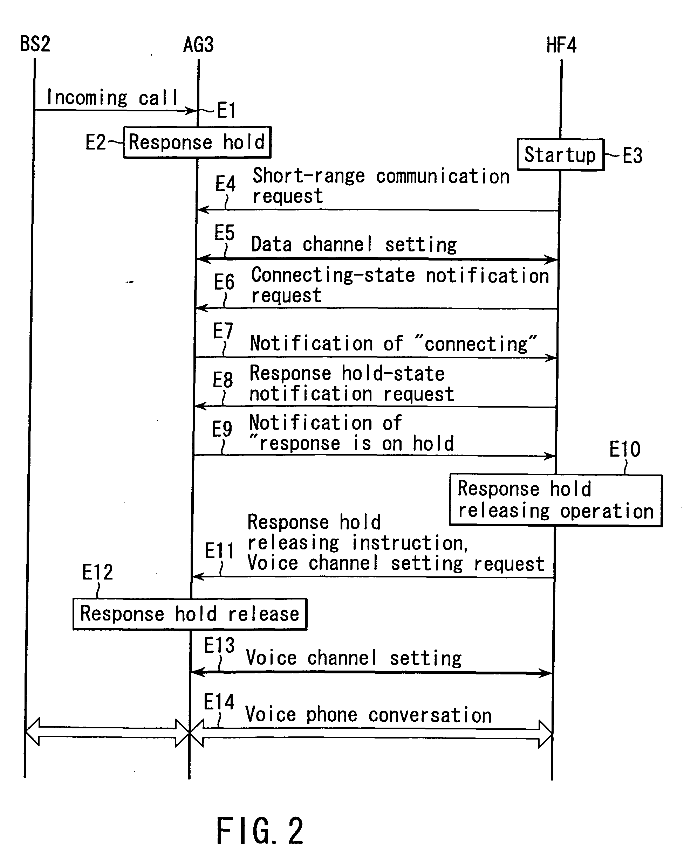

An operation of the handsfree system according to the first embodiment will now be described with reference to FIG. 2. FIG. 2 is a sequence chart of the operation of the handsfree system. In FIG. 2, the double-headed arrows connecting lines of the BS 2, AG 3 and HF 4 indicate communication events between the BS 2, AG 3 and HF 4. The blocks on the lines of the AG 3 and HF 4 indicate their respective operation events. Assume that time elapses from top to bottom in FIG. 2.

When the AG 3 is used in a normal non-handsfree state, an incoming call is issued to the AG 3 from the mobile communication network 1 via the BS 2 (event E1). The AG operation unit 35 operates the AG control unit 34 to place a response to the incoming call on hold (event E2). In other words, the AG 3 is connected to the mobile communication network 1 through the BS 2 and is placing a response to the incoming call on hold. The AG control unit 34 holds status information representing that the AG 3 is connected to the mobile communication network 1 and it is placing a response to the incoming call on hold.

After that, the HF 4 starts up (event E3). This startup is performed by, for example, the startup operation of the HF operation unit 45. If the HF 4 is a car-installed handsfree apparatus, the engine of an automobile can be started by, for example, a trigger for starting the handsfree apparatus. The HF control unit 44 receives an operation signal from the HF operation unit 45, and controls the HF short-range communication unit 41 and sends a short-range communication request to the AG short-range communication unit 39 (event E4). When the unit 39 receives the request, a short-range communication link is established and the data channel 5 is set (event E5). The procedure of establishing the short-range communication link is performed by a known technique such as a protocol of a handsfree profile or a short-range communication means (e.g., Bluetooth). Two-way communication can thus be performed between the AG 3 and HF 4.

The HF control unit 44 inquires of the AG 3 a connecting state (the AG 3 is unconnected, receiving, transmitting or connected) between the AG 3 and the mobile communication network in order to know whether the AG 3 is ready to shift an incoming call to a handsfree conversation. The connecting state is transmitted as a connecting-state notification request to the AG control unit 34 through the HF short-range communication unit 41, data channel 5 and AG short-range communication unit 39 (event E6).

Upon receiving the connecting-state notification request, the AG control unit 34 sends the status information indicating that the AG 3 is connected to the network 1 to the HF control unit 44 via the AG short-range communication unit 39, data channel 5 and HF short-range communication unit 41 (event E7).

When the HF control unit 44 receives the status information, it inquires of the AG 3 whether the AG 3 is placing a response on hold. This inquiry is sent to the AG control unit 34 via the unit 41, channel 5 and unit 39 as a response hold-state notification request (event E8). Upon receiving the response hold-state notification request, the AG control unit 34 sends the status information indicating that the AG 3 is placing a response on hold to the HF control unit 44 via the unit 39, channel 5 and unit 41 (event E9).

When the HF control unit 44 receives the status information indicating that the AG 3 is placing a response on hold, the status information is displayed by a display means (e.g., a liquid crystal display screen or light-emitting diodes) included in the HF operation unit 45. In contrast, an operation of releasing the response from the hold is performed by an input means (e.g., an operation key) included in the HF operation unit 45 (event E10). The HF control unit 44 makes a response hold releasing instruction based on the operation of the input means. The HF control unit 44 also makes a request to set a voice channel in the short-range communication means and sends it to the AG control unit 34 through the unit 41, channel 5 and unit 39 together with the response hold releasing instruction (event E11).

Upon receiving the response hold releasing instruction, the AG control unit 34 releases the response from the hold (event E12). The AG control unit 34 receives a voice channel setting request to control the AC short-range communication unit 39 and also control the HF short-range communication unit 41 via the data channel 5, thereby setting the voice channel 6 (event E13). A method of setting the voice channel 6 is executed under the protocol of the short-range communication means to be used.

Concurrently with the above, the AG control unit 34 controls a connecting-state selecting operation of the selection unit 38 and shifts a connecting state to that shown in FIG. 1B. Thus, the AG speaker 36 and the modulation/demodulation unit 33 of the AG microphone 37 are disconnected from each other, and an HF speaker 42 and an HF microphone 43 are connected to the modulation/demodulation unit 33 via the AG short-range communication unit 39, voice channel 6 and HF short-range communication unit 41. The set voice channel 6 is indicated by a solid line in FIG. 1B. After that, the HF speaker 42 and HF microphone 43 allows a voice phone conversation through the mobile communication network 1, BS 2 and AG 3 (event E14). In the shift of the voice phone conversation, the AG 3 need not operate after event E3.

When the HF control unit 44 receives the status information indicating that the AG 3 is placing a response on hold to the incoming call, the event E10 can be omitted and both a response hold releasing instruction and a voice channel setting request can automatically be made. Accordingly, the HF 4 need not operate either after event E3.

After an incoming call which is issued before the HF 4 starts up and a response to whose is placed on hold is processed to complete the phone conversation, the setting of the voice channel 6 can be maintained or temporarily released (cleared). If the setting is maintained, a handsfree conversation starts immediately after the next incoming call is issued. If the setting is released, it is determined whether a response or a handsfree conversation should be made each time an incoming call is issued. If such selection is allowed in the setting of the AG 3, handsfree functions can be selected according to the circumstances.

According to the first embodiment of the present invention, the HF 4 senses that the AG 3 is placing a response on hold and releases the hold. An incoming call which is issued before the HF 4 starts up and a response to which is placed on hold can smoothly be shifted to the handsfree apparatus only by the minimum operation of the system.

### (Second Embodiment)

An operation of a handsfree system according to a second embodiment of the present invention will now be described with reference to FIG. 3. FIG. 3 is a sequence chart of the operation of the handsfree system according to the second embodiment. The basic configuration of the handsfree system is the same as that of the handsfree system according to the first embodiment. Please see FIGS. 1A and 1B when necessary.

Since the operations of events E1 to E7 in the second embodiment are the same as those in the first embodiment, their descriptions are omitted. Subsequently to event E7, the AG control unit 34 sends the held status information indicating that the AG 3 is placing a response on hold to the HF control unit 44 via the AG short-range communication unit 39, data channel 5 and HF short-range communication unit 41 (event E9). The second embodiment differs from the first embodiment in that event E8 is omitted.

It is natural that the HF 4 makes an inquiry of the AG 3, as in the first embodiment, in order for the HF4 to share information of a response hold state between the AG 3 and the mobile communication network. Under the specific condition that the HF 4 starts up while the AG 3 is placing a response on hold, however, status information can be transmitted without receiving any inquiry from the HF 4. Since the operations after event E9 are the same as those in the first embodiment, the same advantages can be obtained from the second embodiment. The second embodiment is the same as the first embodiment in that event E10 can be omitted. As in the first embodiment, the setting of the voice channel 6 can be maintained or temporarily released after the phone conversation is completed.

The second embodiment can produce the same advantages as those of the first embodiment even though a response hold-state notification request from the HF 4 to the AG 3 is omitted.

### (Third Embodiment)

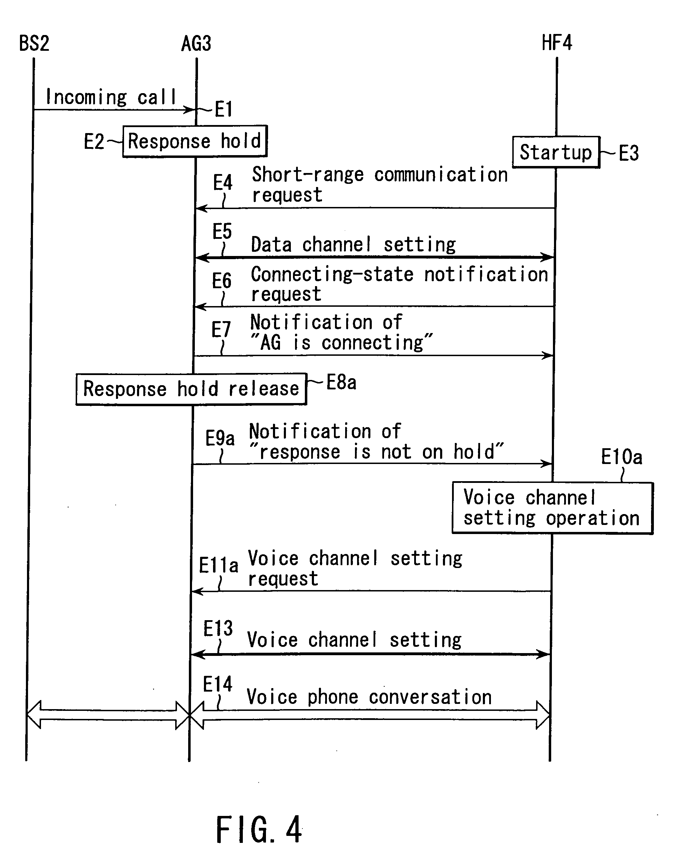

An operation of a handsfree system according to a third embodiment of the present invention will now be described with reference to FIG. 4. FIG. 4 is a sequence chart of the operation of the handsfree system according to the third embodiment. The basic configuration of the handsfree system is the same as that of the handsfree system according to the first embodiment. Please see FIGS. 1A and 1B when necessary.

Since the operations of events E1 to E7 in the third embodiment are the same as those in the first embodiment, their descriptions are omitted. Subsequently to event E7, the AG control unit 34 releases a response from the hold on an autonomous basis (event E8a), unlike in the first embodiment (see FIG. 2). This operation simplifies the operation sequence by configuring the system such that the AG 3 has control to release a response from the hold unlike in the systems of the first and second embodiments which are configured such that the HF 4 has control to release a response from the hold.

The AG control unit 34 sends status information indicating that the AG 3 is not placing a response on hold to the HF control unit 44 via the AG short-range communication unit 39, data channel 5 and HF short-range communication unit 41 (event E9a). Upon receiving the status information, the HF control unit 44 displays the status information on a display means included in the HF operation unit 45 and sets a voice channel using an input means (event E10a). The HF control unit 44 makes a request to set a voice channel based on the input operation and sends it to the AG control unit 34 via the unit 41, channel 5 and unit 39 (event 11a). As the event E10 can be omitted from the first embodiment, the event E10a can be done from the second embodiment to automatically make and send a voice channel setting request.

The AG control unit 34 receives the voice channel setting request and sets a voice channel 6 as in the first embodiment (event E13), thereby allowing a voice handsfree conversation (event E14). Like in the first and second embodiments, the setting of the voice channel 6 can be maintained or temporarily released after the phone conversation is completed.

The third embodiment can produce the same advantages as those of the first embodiment even though the operations of transferring status information indicating the AG 3 is placing a response on hold between the HF 4 and AG 3 and giving a response hold releasing instruction are omitted.

### (Fourth Embodiment)

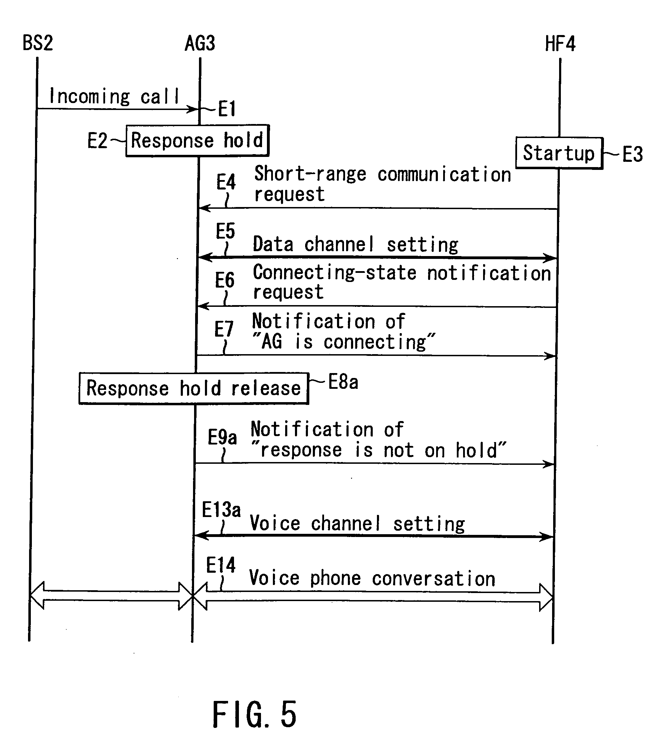

An operation of a handsfree system according to a fourth embodiment of the present invention will now be described with reference to FIG. 5. FIG. 5 is a sequence chart of the operation of the handsfree system according to the fourth embodiment. The basic configuration of the handsfree system is the same as that of the handsfree system according to the first embodiment. Please see FIGS. 1A and 1B when necessary.

Since the operations of events E1 to E9a in the fourth embodiment are the same as those in the third embodiment, their descriptions are omitted. Subsequently to event E9a, the AG control unit 34 sets a voice channel 6 on an autonomous basis (event E13a), unlike in the third embodiment (FIG. 4). This operation simplifies the operation sequence by configuring the system such that the voice channel can be set only by the AG 3 unlike in the system of the third embodiment which is configured such that the HF 4 gives an instruction to set a voice channel.

After the voice channel 6 is set, a handsfree phone conversation can be made as in the first to third embodiments (event E14).

Like in the first to third embodiments, the setting of the voice channel 6 can be maintained or temporarily released after the phone conversation is completed. Unlike in the third embodiment, the event E9a can be omitted because the voice channel 6 is set though the HF 4 does not receive the status information indicating that the AG 3 is not placing a response on hold from the AG 3.

The fourth embodiment can produce the same advantages as those of the third embodiment even though a voice channel setting request sent from the HF 4 to the AG 3 is omitted.

As described above in detail, the present invention allows a handsfree apparatus to share status information indicating a connection between the portable radio communication apparatus and the mobile communication network. If, therefore, the handsfree apparatus gives an appropriate instruction to the portable radio communication apparatus in accordance with the status information, a call whose response is on hold can smoothly be shifted to the handsfree apparatus.

## Claims

1. A handsfree phone conversation method, **characterized by** comprising:
transmitting (E4) a short-range communication request to a portable radio communication apparatus, which is connectable to a mobile communication network, from a handsfree apparatus having short-range communication means, and allowing (E5) the short-range communication means to perform two-way communication with the portable radio communication apparatus;
requesting (E6) the portable radio communication apparatus to make a notification of a connection between the portable radio communication apparatus and the mobile communication network by the handsfree apparatus;
notifying (E7 to E9) the handsfree apparatus that the portable radio communication apparatus is connected to the mobile communication network and is placing a response to an incoming call on hold by the portable radio communication apparatus in a case where the incoming call is issued from the mobile communication network before the notification of the connection is received and the response is on hold (E1, E2);
requesting (E11) the portable radio communication apparatus to release the response from the hold by the handsfree apparatus that has been notified, and requesting (E11) the short-range communication means to set a voice channel; and
releasing (E12) the response from the hold by the portable radio communication apparatus that has been requested, and setting (E13) a voice channel between the portable radio communication apparatus and the handsfree apparatus through the short-range communication means, thereby allowing a voice phone conversation using the handsfree apparatus (E14).

2. The handsfree phone conversation method according to claim 1, **characterized in that** the notifying (E7 to E9) includes notifying the handsfree apparatus that the response is on hold when the portable radio communication apparatus receives a response hold notification request (E8) from the handsfree apparatus.

3. The handsfree phone conversation method according to claim 1, **characterized in that** the notifying (E7 to E9) includes automatically notifying the handsfree apparatus that the response is on hold after the portable radio communication apparatus notifies the handsfree apparatus that the portable radio communication apparatus is connected to the mobile communication network.

4. A handsfree phone conversation method, **characterized by** comprising:
transmitting (E4) a short-range communication request to a portable radio communication apparatus, which is connectable to a mobile communication network, from a handsfree apparatus having short-range communication means, and allowing (E5) the short-range communication means to perform two-way communication with the portable radio communication apparatus;
requesting (E6) the portable radio communication apparatus to make a notification of a connection between the portable radio communication apparatus and the mobile communication network by the handsfree apparatus;
notifying (E7) the handsfree apparatus that the portable radio communication apparatus is connected to the mobile communication network by the portable radio communication apparatus in a case where an incoming call is issued from the mobile communication network before the notification of the connection is received and a response to the incoming call is on hold (E1, E2);
releasing (E8a) the response from the hold by the portable radio communication apparatus in itself and notifying (E9a) the handsfree apparatus that the response is not on hold; and
setting (E13) a voice channel between the portable radio communication apparatus and the handsfree apparatus through the short-range communication means after the handsfree apparatus is notified, thereby allowing a voice phone conversation using the handsfree apparatus (E14).

5. The handsfree phone conversation method according to claim 4, **characterized in that** the setting (E13) includes setting the voice channel by the portable radio communication apparatus upon receiving (E11a) a setting request from the handsfree apparatus.

6. The handsfree phone conversation method according to claim 4, **characterized in that** the setting (E13) includes automatically setting (E13a) the voice channel by the portable radio communication apparatus.

7. The handsfree phone conversation method according to claim 1 or 4, **characterized in that** the portable radio communication apparatus determines whether to maintain setting of the voice channel after the voice phone conversation is completed.

8. A portable radio communication apparatus, **characterized by** comprising:
short-range communication means (39) for allowing two-way communication with a handsfree apparatus;
notifying means (34, 39) for notifying the handsfree apparatus that the portable radio communication apparatus is connected to a mobile communication network and a response to an incoming call is on hold in reply to a notification request from the handsfree apparatus through the short-range communication means in a case where the incoming call is issued from the mobile communication network before the notifying means receives a short-range communication request from the handsfree apparatus and the response is on hold;
releasing means (34) for releasing the response from the hold upon receiving a request from the handsfree apparatus; and
phone conversation selection means (34, 38, 39) for setting a voice channel of the short-range communication means after the response is released from the hold to allow a voice phone conversation using the handsfree apparatus.

9. The portable radio communication apparatus according to claim 8, **characterized in that** the notifying means (34, 39) notifies the handsfree apparatus that the response is on hold upon receiving a notification request again from the handsfree apparatus after the notifying means notifies the handsfree apparatus that the portable radio communication apparatus is connected to the mobile communication network.

10. The portable radio communication apparatus according to claim 8, **characterized in that** the notifying means (34, 39) automatically notifies the handsfree apparatus that the response is on hold after the notifying means notifies the handsfree apparatus that the portable radio communication apparatus is connected to the mobile communication network.

11. A portable radio communication apparatus,
**characterized by** comprising:
short-range communication means (39) for allowing two-way communication with a handsfree apparatus;
notifying means (34, 39) for notifying the handsfree apparatus that the portable radio communication apparatus is connected to a mobile communication network in reply to a notification request from the handsfree apparatus through the short-range communication means in a case where an incoming call is issued from the mobile communication network before the notifying means receives a short-range communication request from the handsfree apparatus and a response to the incoming call is on hold;
releasing means (34) for releasing the response from the hold;
notifying means (34, 39) for notifying the handsfree apparatus that the response is not on hold through the short-range communication means after the response is released from the hold; and
phone conversation selection means (34, 38, 39) for setting a voice channel of the short-range communication means after the notifying means notifies the handsfree apparatus that the response is not on hold to allow a voice phone conversation using the handsfree apparatus.

12. The portable radio communication apparatus according to claim 11, **characterized in that** the phone conversation selection means (34, 38, 39) sets the voice channel upon receiving a setting request from the handsfree apparatus.

13. The portable radio communication apparatus according to claim 11, **characterized in that** the phone conversation selection means (34, 38, 39) automatically sets the voice channel.

14. The portable radio communication apparatus according to claim 8 or 11, **characterized in that** the phone conversation selection means (34, 38, 39) determines whether to maintain setting of the voice channel after the voice phone conversation is completed.

15. A handsfree system, **characterized by** comprising:
a portable radio communication apparatus (3) including:
short-range communication means (39) for allowing two-way communication with a handsfree apparatus,
notifying means (34, 39) for notifying the handsfree apparatus that the portable radio communication apparatus is connected to a mobile communication network and a response to an incoming call is on hold in reply to a notification request from the handsfree apparatus through the short-range communication means in a case where the incoming call is issued from the mobile communication network before the notifying means receives a short-range communication request from the handsfree apparatus and the response is on hold,
releasing means (34) for releasing the response from the hold upon receiving a request from the handsfree apparatus, and
phone conversation selection means (34, 38, 39) for setting a voice channel of the short-range communication means after the response is released from the hold to allow a voice phone conversation using the handsfree apparatus; and
a handsfree apparatus (4) for transmitting both the short-range communication request and a request to release the response from the hold to the portable radio communication apparatus to input/output voice.

16. A handsfree system, **characterized by** comprising:
a portable radio communication apparatus including:
short-range communication means (39) for allowing two-way communication with a handsfree apparatus,
notifying means (34, 39) for notifying the handsfree apparatus that the portable radio communication apparatus is connected to a mobile communication network in reply to a notification request from the handsfree apparatus through the short-range communication means in a case where an incoming call is issued from the mobile communication network before the notifying means receives a short-range communication request from the handsfree apparatus and a response to the incoming call is on hold,
releasing means (34) for releasing the response from the hold,
notifying means (34, 39) for notifying the handsfree apparatus that the response is not on hold through the short-range communication means after the response is released from the hold, and
phone conversation selection means (34, 38, 39) for setting a voice channel of the short-range communication means after the notifying means notifies the handsfree apparatus that the response is not on hold to allow a voice phone conversation using the handsfree apparatus; and
a handsfree apparatus (4) for transmitting the short-range communication request to the portable radio communication apparatus to input/output voice.
